# EUROPÄISCHE PATENTSCHRIFT

(11) **EP 2 185 343 B1**
(45) Veröffentlichungstag und Bekanntmachung des Hinweises auf die Patenterteilung: **01.01.2014**
(21) Anmeldenummer: 08801867.6
(22) Anmeldetag: 05.09.2008
(51) Int. Cl.: B29C 65/34, B29C 53/60, F16L 47/22, F16L 9/16, B29C 47/00

(54) **HEIZWENDELMUFFE**
HEATING COIL SLEEVE
MANCHON CHAUFFANT

(30) Priorität: 07.09.2007 DE 102007042807
(43) Veröffentlichungstag der Anmeldung: 19.05.2010
(73) Patentinhaber: egeplast international GmbH, 48268 Greven (DE)
(72) Erfinder: SPÄTH, Thorsten, 48282 Emsdetten (DE); STRANZ, Michael, 48432 Rheine (DE)
(74) Vertreter: Fritz & Brandenburg Patentanwälte
(86) Internationale Anmeldenummer: PCT/EP2008/007273
(87) Internationale Veröffentlichungsnummer: WO 2009/033608

(56) Entgegenhaltungen:
- WO-A-97/44173
- GB-A- 2 425 337

## Beschreibung

Die vorliegende Erfindung betrifft ein Verfahren zur Herstellung einer Schweißmuffe zur Verbindung mindestens zweier Kunststoffrohre oder Verbundrohre, bei dem man in einem ersten Schritt einen zylindrischen Träger aus Kunststoff herstellt, auf diesen zylindrischen Träger wenigstens eine Verstärkungsschicht aufbringt, indem man wenigstens eine Lage aus einem Verstärkungsband aus einem in wenigstens einer Richtung orientierten Kunststoff auf den zylindrischen Träger aufwickelt und man das Verstärkungsband mit dem zylindrischen Träger durch Verschweißen stoffschlüsslg verbindet.

Es sind heute in der Praxis eine Reihe von Verfahren bekannt, mittels derer eine Verbindung zwischen mindestens zwei Kunststoffrohren unter Verwendung von Muffenkörpem hergestellt wird. Insbesondere werden dazu Heizwendelmuffen verwendet, um die Kontaktflächen der Muffe und der zu verschweißenden Kunststoffrohre zu erwärmen und aufzuschmelzen. In der Regel bestehen die herkömmlichen Heizwendelmuffen aus Kunststoff. Die Festigkeit der Muffe wird daher bestimmt durch die physikalischen Eigenschaften des Werkstoffs und die (radiale) Dicke des Muffenkörpers. Für eine Verbindung zwischen zwei Rohren, die für hohe Betriebsdrücke ausgelegt sind, müssen daher im allgemeinen vergleichsweise dicke und somit teure herkömmliche Muffen verwendet werden. In der EP 0 555 684 A1 ist eine Schweißmuffe mit einem Muffenkörper aus einem thermoplastischen Material beschrieben, bei der am Umfang des Muffenkörpers durch Aufpressen ein Verstärkungsring angeordnet ist. Dieser Verstärkungsring wird beim Aufschieben auf den Muffenkörper aufgeweitet und weist dadurch Umfangs-Spannungen auf, die radial auf den Muffenkörper wirken und den für eine gute Schweißverbindung erforderlichen Schweißdruck erhöhen.

Bei herkömmlichen Heizwendelschweißmuffen entsteht der Anpreßdruck zwischen den zu verschweißenden Flächen durch die Reduzierung der Dichte beim Aufschmelzen. Aus dem Stand der Technik sind auch alternative Ansätze bekannt geworden. Zum Beispiel wird in der EP 0036963 A1 eine Heizwendelmuffe vorgeschlagen bei der zusätzliche Kräfte durch zuvor eingebrachte latente Schrumpfspannungen eingebracht werden. Der Ringkörper der Muffe wird dabei durch Warmrecken behandelt und weist danach eine latente radiale Restschrumpfspannung auf. Beim Erwärmen während des Schweißvorgangs über die in die Muffe integrierten Heizwendel, wird diese "eingefrorene" Schrumpfspannung quasi aktiviert und damit eine radiale Kraft und ein zusätzlicher Schweißdruck erzeugt.

In der WO 2006/096297 A2 wird eine Kunststoffschweißmuffe für das Verbinden zweier Kunststoffrohre beschrieben mit einem rohrförmigen Muffenkörper aus Kunststoff, über den zur Verstärkung eine Hülse geschoben wird. Diese Hülse kann geschlitzt sein und hat eine vergleichsweise geringe Materialstärke. Es ist davon auszugehen, dass es sich hier um eine metallische Verstärkungshülse handelt. Diese erhöht zwar die Festigkeit des Muffenkörpers. Dieser Ist Jedoch nicht werkstoffhomogen. Da das Metall nicht aufschmilzt, nimmt nur der aus Kunststoff bestehende Innere Ring des eigentlichen Muffenkörpers an dem Schweißvorgang teil.

In der WO 01/06168 A1 ist eine Heizwendelmuffe mit den Merkmalen der eingangs genannten Gattung beschrieben, die sich auch für mehrschichtige Rohre aus Kunststoff eignet. Diese Heizwendelmuffe ist Insbesondere für die Verbindung von Rohren vorgesehen, die ein unter erhöhtem Betriebsdruck stehendes Fluid transportieren. Es ist ein ringförmiger Muffenkörper aus Polyethylen vorgesehen, der im Spritzgußverfahren hergestellt wird. In diesem ringförmigen Muffenkörper eingeschlossen ist ein ringförmiges Verstärkungselement. Bei der Herstellung dieser verstärkten Heizwendelmuffe wird wie folgt vorgegangen. Zunächst wird ein zylindrischer Kern hergestellt, um den ein Heizwendeldraht gewunden wird. Dann wird der mit dem Heizwendeldreht bestückte Kern in eine Spritzgußform eingelegt, wobei ein erster ringförmiger Körper, welcher aus Kunststoff sein kann und eine etwas geringere axiale Länge aufweist als der Kern, im Spritzgußverfahren um den Kern gespritzt wird. Dabei wird auch ein ringförmiges Verstärkungselement, welches aus Metall oder einem glasfaserverstärkten Kunststoff besteht und den ersten ringförmigen Körper umgibt, angeordnet. Dieses ringförmige Verstärkungselement soll aus einem Material bestehen, welches eine höhere Zugfestigkeit aufweist als dasjenige des Kerns. Danach wird in einem zweiten Spritzgußverfahren in einer weiteren Spritzgußform ein zweiter ringförmiger Körper um den ersten ringförmigen Körper und das ringförmige Verstärkungselement gespritzt, welcher eine etwas größere axiale Länge aufweist als die beiden vorgenannten Elemente, etwa entsprechend der Länge des Kerns, wobei nach dem zweiten Spritzvorgang dieser zweite ringförmige Körper auch den zylindrischen Kern der Muffe umgibt.

Ein wesentlicher Nachteil dieser bekannten Heizwendelmuffe ist das recht aufwändige Verfahren zu deren Herstellung. Da mehrere Spritzgußvorgänge erfolgen müssen die dafür erforderlichen Werkzeuge angefertigt werden. Die Abfolge der Verfahrensschritte Ist zeitaufwändig und daher nachteilig für eine rationelle industrielle Fertigung. Wenn das ringförmige Verstärkungselement aus Metall besteht, handelt es sich um ein Bauteil aus einem Verbundmaterial, welches ein aufwändigeres Recycling erfordert.

Ein Verfahren zur Herstellung einer Schweißmuffe zur Verbindung mindestens zweier Kunststoffrohre oder Verbundrohre mit den eingangs genannten Merkmalen ist in der WO 97/44173 beschrieben. Dort wird zunächst ein Innerer Kern im Spritzgußverfahren hergestellt, der jedoch über seine Länge einen ungleichen Querschnitt hat und außen nicht rein zylindrisch ist. Auf diesen Kern werden dann Lagen mit Verstärkungsbändern aufgewickelt, wovon jedoch die Endbereiche des vorgeformten Kerns ausgenommen sind. Nach dem Spritzgleßen muss zunächst der vorgeformte Kern entformt werden, bevor die Verstärkungsbänder aufgewickelt werden können. Dieses Verfahren ermöglicht daher keine kontinuierliche Herstellung der Schweißmuffen.

Eine weitere Elektroschweißmuffe wird in der GB 2 425 337 A beschrieben. Diese ist spezifisch für das Verschweißen von mehrschichtigen Rohren ausgelegt und weist dazu im Endbereich einen Absatz auf, so dass mit dem äußeren im Querschnitt reduzierten Bereich der Schweißmuffe eine äußere Schicht eines Mehrschichtrohrs verschweißt werden kann und mit dem inneren Bereich der Muffe eine innere Schicht des Rohrs in einem Im Durchmesser reduzierten Endbereich verschweißt werden kann. Die Schweißmuffe kann mehrschichtig aufgebaut sein mit einer äußeren Kunststoffschicht, einer Berriereschicht aus Aluminium und einer inneren verschweißbaren Kunststoffschicht. Die Herstellung der Schweißmuffe kann zwar erfolgen, indem zunächst ein Verbundrohr extrudiert wird, danach ist aber eine mechanische Bearbeitung erforderlich, um einen Absatz und eine stirnseitige Anlagefläche zu schaffen. Die Barriereschicht dient nicht zur mechanischen Verstärkung der Muffe, sondern als Diffusionabarriere.

Hier setzt die vorliegende Erfindung ein. Die Aufgabe der vorliegenden Erfindung besteht darin, ein Verfahren zur Herstellung einer Schweißmuffe geeignet für das Verschweißen mindestens zweier Kunststoffrohre oder Verbundrohre unter Verwendung eines rohrförmigen Muffenkörpers der eingangs genannten Gattung zur Verfügung zu stellen, bei der sich im Vergleich zu einer Muffe gleicher Wandstärke eine Muffenverbindung zweier Rohre herstellen lässt, die höhere Betriebsdrücke im Hinblick auf das in der Rohrleitung fließende Medium zulässt, wobei das Verfahren zur Herstellung der Schweißmuffe rationeller ist als herkömmliche Verfahren.

Die Lösung dieser Aufgabe liefert ein Verfahren zur Herstellung einer Schweißmuffe der eingangs genannten Gattung mit den kennzeichnenden Merkmalen des Hauptanspruchs.

Erfindungsgemäß ist vorgesehen, dass wenigstens eine Verstärkungsschicht wenigstens ein In mindestens einer Raumrichtung orientiertes Verstärkungsband aus einem thermoplastischen Kunststoff umfasst, welches auf einen zylindrischen Träger aus Kunststoff der Heizwendelmuffe aufgewickelt Ist.

Vorzugsweise ist vorgesehen, dass der Muffenkörper einen Verbund mindestens dreier Schichten aus Kunststoff umfasst, von denen mindestens eine Schicht eine orientierte und auf den Träger gewickelte Verstärkungsschicht ist, wobei eine der anderen Schichten eine äußere Deckschicht Ist, die die Verstärkungsschicht überdeckt.

Diese Verstärkungsschicht wird hergestellt durch Aufwickeln von hochfesten Verstärkungsbändern auf einen rohrförmigen Träger aus Kunststoff, Diese Verstärkungsbänder enthalten mindestens eine Schicht aus einem thermoplastischen Kunststoff, der in mindestens einer Raumrichtung orientiert ist. Unter Orientierung wird dabei verstanden, dass ein gewisser Prozentsatz des Gefüges des diese Schicht bildenden thermoplastischen Polymeren eine Orientierung in dieser mindestens einen Raumrichtung aufweist, vorzugsweise in Längsrichtung des Verstärkungsbandes.

Vorzugsweise bestehen auch die mindestens zwei anderen Schichten des Muffenkörpers Jeweils aus thermoplastischen Kunststoffen. Weiterhin werden diese beiden anderen Schichten jeweils in einem Extrusionsverfahren hergestellt. Es wird also gemäß der Erfindung so vorgegangen, dass zunächst ein mindestens diese erste (innere) Schicht umfassender Rohrkörper extrudiert wird, der als zylindrischer Träger dient für die anschließend auf diesen durch Aufwickeln aufzubringenden Bänder, die als Verstärkungsschicht dienen. Danach wird mindestens eine dritte Schicht, die vorzugsweise eine äußere Deckschicht ist, auf die Verstärkungsschicht aufextrudiert.

Die vorliegende Erfindung verwendet eine Verstärkungsschicht mit vergleichsweise hoher Festigkeit, die der Muffe insgesamt hohe mechanische Festigkeit, insbesondere gegen in radialer Richtung einwirkende Druckkräfte verleiht, wobei diese Verstärkungsschicht dennoch eine vergleichsweise geringe Schichtdicke aufweist. Dies schafft einen wesentlichen Vorteil gegenüber Muffenkörpern aus herkömmlichen Kunststoffen, welche bei gleicher Festigkeit ein erheblich größeres Volumen an Kunststoff und eine entsprechend größere Materialstärke benötigen würden. Gleichzeitig besteht gegenüber den aus dem Stand der Technik bekannten Muffen mit metallischen äußeren Verstärkungsringen oder metallischen Einlagen der Vorteil der guten Recycelbarkeit. Die erfindungsgemäßen Muffenkörper lassen sich werkstoffhomogen oder weitgehend werkstoffhomogen herstellen. Kunststoffe mit gleichen oder ähnlichen chemischen Eigenschaften lassen sich erfindungsgemäß verwenden. Die einzelnen Schichten des Muffenkörpers werden bei der Herstellung stoffschlüssig miteinander verschweißt.

Die oben genannte Orientierung der für das Aufwickeln verwendeten Bänder kann man vorzugsweise dadurch erzielen, dass man diese Bänder kalt verstreckt. Unter "kalt" verstrecken wird dabei verstanden, dass dieses bei einer Temperatur stattfindet, die ausreichend unterhalb des Schmelzpunktes des verwendeten Polymeren liegt, was heißt, dass dies durchaus eine gegenüber der Raumtemperatur erhöhte Temperatur sein kann. Durch das Verstrecken kann man erreichen, dass diese Bänder nicht nur eine Orientierung Insbesondere In Längsrichtung aufweisen, sondern auch quasi eingefrorene Spannungen Insbesondere in Längsrichtung der Bänder vor dem Aufwickeln auf die zylindrische Kernschicht des Trägers. Nach dem Aufwickeln auf diesen Träger, welches beispielsweise etwa spiralförmig erfolgen kann, handelt es sich dann um Spannungen in Umfangsrichtung bezogen auf den Muffenkörper. Diese erzeugen zum einen eine höhere Druckfestigkeit gegen radial nach außen wirkende Kräfte aus dem Rohrinneren und zum anderen besteht auch eine Tendenz zur Schrumpfung, wenn ein solcher erfindungsgemäßer mehrschichtiger Muffenkörper durch Erwärmen auf die zu verbindenden Rohre aufgeschweißt wird, wodurch eine Erhöhung des Schweißdrucks erzielt wird,

Die vorliegende Erfindung ist insbesondere aber keineswegs ausschließlich anwendbar für Heizwendelmuffen für die Verbindung von mehrschichtigen Kunststoffrohren. Diese bestehen bevorzugt aus mehreren Kunststoffschichten mit gleichen oder unterschiedlichen Werkstoffeigenschaften. Es kommen aber auch Rohre mit mehreren Schichten in Betracht, die ein oder mehrere Schichten aus anderen Materiallen enthalten, zum Beispiel aus Metall. Diese Rohre werden im Rahmen der vorliegenden Anmeldung als Verbundrohre bezeichnet. Vorzugsweise bestehen diese Verbundrohre Jedoch ebenfalls überwiegend aus Kunststoff. Es kann sich zum Beispiel um Verbundrohre handeln, bei denen zwischen zwei Schichten aus Kunststoff eine Metallschicht eingebettet ist.

Die vorliegende Erfindung kommt In erster Linie in Betracht für so genannte Heizwendelmuffen, bei denen die für das Verschweißen mit den zu verbindenden Rohren notwendige Energie über Heizwendel eingebracht wird, die in den Muffenkörper eingebettet sind, die dann elektrisch beheizt werden. Man kann aber auch alternativ dazu beispielsweise in den Werkstoff des Muffenkörpers mindestens bereichsweise elektromagnetische Strahlung absorbierende Partikel einbetten, so dass man für die Verschweißung elektromagnetische Strahlung insbesondere eines spezifischen Wellenlängenbereichs einbringen kann. Der Werkstoff selbst absorbiert diese elektromagnetische Strahlung vorzugsweise in geringerem Umfang als die genannten absorbierenden Partikel, so dass an diesen eine Erwärmung erfolgt und sich somit die für das Verschweißen erforderliche Wärme ebenfalls sehr gezielt und dosiert in die gewünschten Bereiche der Kontaktflächen des Muffenkörpers am Umfang der zu verbindenden Rohre einbringen lässt.

Die für die mindestens drei Schichten des erfindungsgemägen Muffenkörpers verwendeten Kunststoffe umfassen insbesondere thermoplastische Polymere, vorzugsweise Polyolefine, Polyvinylhalogenide und Polyamide, Polyolefine wie Polyethylen und Polypropylen sind besonders bevorzugt. Vorzugsweise bestehen die jeweils benachbarten Schichten aus miteinander kompatiblen Kunststoffen, besonders bevorzugt ist die Verwendung chemisch ähnlicher Kunststoffe für benachbarte Schichten des Muffenkörpers. Beispielsweise können alle mindestens drei Schichten aus chemisch verwandten Kunststoffen wie zum Beispiel Polyolefinen bestehen, wobei vorzugsweise die Verstärkungsschicht einen Kunststoff der gleichen oder einer ähnlichen Verbindungsklasse umfasst, aus denen auch die jeweils benachbarten Schichten bestehen, jedoch mit der Maßgabe, dass der Werkstoff in der Verstärkungsschicht durch einen vorhergehenden physikalischen Prozess eine Orientierung erhalten hat. Es ist also beispielsweise möglich, dass ein dreischichtiger Muffenkörper gemäß der Erfindung durchgehend aus nur einem Kunststoff oder ähnlichen Kunststoffen der gleichen Verbindungsklasse besteht und somit weitgehend werkstoffhomogen aufgebaut ist.

Bei der Herstellung einer erfindungsgemäßen Schweißmuffe kann man gemäß einer Variante der Erfindung beispielsweise wie folgt vorgehen. Zunächst extrudiert man ein einschichtiges Rohr aus einem thermoplastischen Kunststoff herkömmlicher Art, beispielsweise einem Polyolefin. Dieses Rohr dient im nächsten Schritt als zylindrischer Träger für ein oder mehrere Lagen aus orientierten Kunststoffbändern, welche auf den zylinderischen Träger aufgewickelt werden. Um den Verbund aus dem zylindrischen Träger und den auf diesen gewickelten hochfesten Bändern zu schaffen, verwendet man bevorzugt ein spezifisches Schweißverfahren mittels IR-Laser-Strahlung, welche selektiv in mindestens einem Teil der auf den Träger aufgewickelten Verstärkungsbänder absorbiert wird. Auf diese Weise kann man eine selektive Erwärmung beispielsweise nur einer dünneren Deckschicht der Bänder erreichen, was vermeidet, dass die Verstärkungsbänder sich zu stark erwärmen und dadurch der Kunststoff seine Orientierung und seine besondere Festigkeit verliert. Die Verstärkungsbänder können beispielsweise aus einem Polyolefin bestehen, welches durch vorheriges Verstrecken seine Orientierung in einer Vorzugsrichtung (bevorzugt in Längsrichtung) erhalten hat. Nach dem Verschweißvorgang mittels Laserstrahlung erhält man einen Verbundkörper aus dem Keimmaterial und den auf diese aufgebrachten Verstärkungsbändern, welches weitgehend werkstoffhomogen ist und einen festen Verbund aufweist. Durch Verwendung der Verstärkungsbänder wird die Belastbarkeit des Muffenkörpers in radialer Richtung und damit die Druckfestigkeit des Muffenkörpers erhöht. Auf die zuvor beschriebene Weise lassen sich zunächst zweischichtige Rohrkörper in einem kontinuierlichen Verfahren herstellen, die dann nach Bedarf abgelängt werden und als Rohlinge für das weitere Verfahren dienen.

In einen solchen Rohling kann man dann beispielsweise eine spiralförmige Nut in die innere Umfangsfläche einschnelden (einfräsen) und in dieser Nut einen Heizdraht einlegen. Diesbezügliche Verfahren zum automatischen Einiegen eines Heizdrahts in einen Muffenkörper sind an sich aus dem Stand der Technik bekannt und beispielsweise in der EP 1 042 108 B1 beschrieben. Um die Verstärkungsschicht aus den aufgewickelten orientierten Bändern nach außen hin zu schützen, überzieht man dann vorzugsweise den Muffenkörper außenseitig mit einer äußeren Deckschicht aus Kunststoff, die als Schutzschicht dient und beispielsweise aufextrudiert oder aufgespritzt werden kann. Diese äußere Deckschicht kann beispielsweise ebenfalls aus einem Polyolefin bestehen, so dass dann alle drei Schichten der Schweißmuffe weitgehend werkstoffhomogen sind,

Die in den Unteransprüchen genannten Merkmale betreffen bevorzugte Weiterbildungen der erfindungsgemäßen Aufgabenlösung. Weltere Vorteile der Erfindung ergeben sich aus der nachfolgenden Detailbeschreibung.

Nachfolgend wird die vorliegende Erfindung anhand von Ausführungsbeispielen unter Bezugnahme auf die beiligenden Zeichnungen näher beschrieben.

Dabei zeigen:
Figur 1 eine schematisch vereinfachte Darstellung zweier über eine Heizwendelmuffe gemäß einer möglichen Ausführungsvariante der vorliegenden Erfindung zu verbindender Kunststoffrohre;
Figur 2 eine vergrößerte Darstellung eines Detailausschnitts II von Figur 1 im Bereich der Verbindung zwischen Schweißmuffe und den beiden Kunststoffohren nach dem Verschweißen.

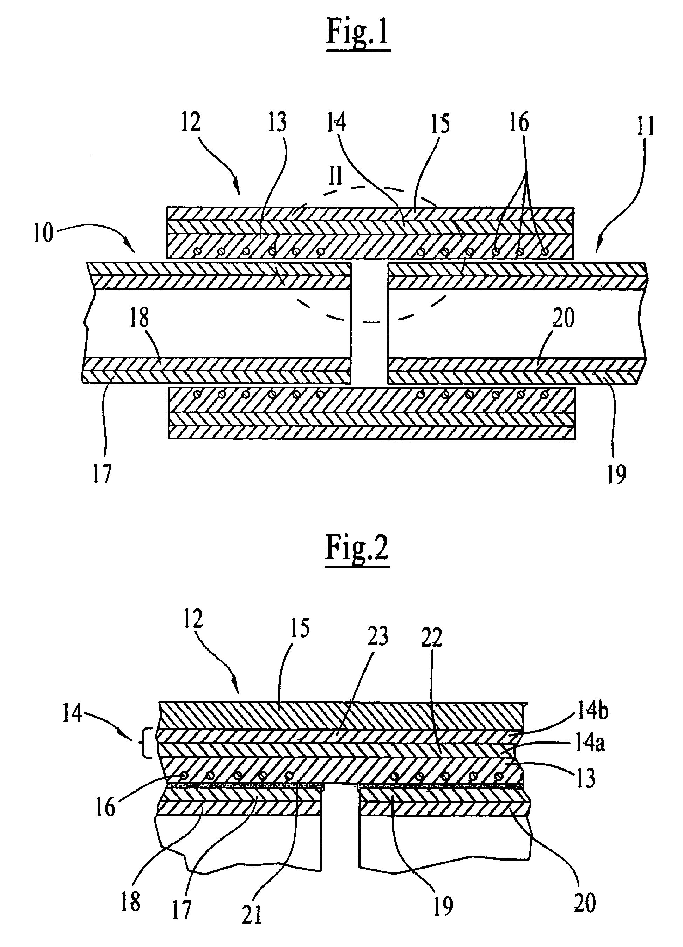

Zunächst wird auf die Figur 1 Bezug genommen. Diese zeigt in schematisch vereinfachter Darstellung eine erfindungsgemäße verstärkte dreischichtige Heizwendelmuffe 12 sowie abschnittsweise zwei von dieser Muffe aufgenommene mehrschichtige Kunststoffrohre 10, 11, die über die Muffe 12 miteinander verschweißt und so zu einem einzigen Rohrstrang verbunden werden. In dem vorliegenden Ausführungsbeispiel sind die beiden Kunststoffrohre 10, 11 jeweils zweischichtig und weisen je eine äußere Schicht 17 bzw. 19 auf sowie je eine innere Schicht 18 bzw, 20. Ebenso gut können jedoch auch einschichtige oder dreioder mehrschichtige Kunststoffrohre mittels einer erfindungsgemäßen Schweißmuffe verbunden werden. Es kommen auch Verbundrohre aus Kunststoff- und Metallschichten In Betracht. Um eine Verschweißung der Rohre an ihrem äußeren Umfang mit der inneren Umfangsschicht der Schweißmuffe zu ermöglichen, sollte jedoch mindestens die äußere Schicht 17 bzw. 19 der Rohre jeweils eine aufschmeizbare Kunststoffschicht sein.

Erfindungsgemäß besteht nun die verwendete Schweißmuffe 12 aus mehreren Schichten, wodurch eine höhere mechanische Festigkeit erzielt wird und höhere radiale Druckkräfte im Bereich der Schweißverbindung aufgenommen werden können. Die in Figur 1 gezeigte Schweißmuffe 12 hat einen dreischichtigen Aufbau mit einer Innenschicht 13 aus Kunststoff, in die die Heizwendel 16 eingebettet sind, die dazu dienen, die Muffe im Bereich Ihrer Kontaktfläche zu den beiden zu verbindenden Kunststoffrohfen 10, 11 zu erwärmen. An diese innere Schicht 13 schließt sich nach außen hin eine mittlere Schicht 14 an, die eine Verstärkungsschicht ist. Die Herstellung und der Aufbau dieser Verstärkungsschicht 14 werden weiter unten noch unter Bezugnahme auf Figur 2 näher erläutert. An die mittlere Verstärkungsschicht 14 schließt sich schließlich nach außen hin eine weitere Schicht 15 aus Kunststoff an, die eine äußere Deckschicht der Schweißmuffe 12 ist. Die inneren Bereiche und die Kontaktflächen der Schweißmuffe 12 werden zwecks Verschweißung über die eingebetteten Heizwendel 16 erwärmt und auf diese Weise wird die Schweißmuffe 12 jeweils mit den äuβeren Umfangsflächen der beiden zu verbindenden Kunststoffrohre 10, 11 verschweißt.

Der Aufbau der mittleren Verstärkungsschicht 14 sowie die Verschweißung zwischen den beiden Rohren 10, 11 mittels der Schweißmuffe 12 wird nun nachfolgend anhand von figur 2 näher erläutert. Die Heizwendel 16 erwärmen den radial innen liegenden Bereich der inneren Schicht 13 der Schweißmuffe ebenso wie die jeweilige äußere Umfangsfläche der beiden äußeren Schichten 17, 19 der beiden Rohre, so dass dort jeweils Material aufschmilzt und sich jeweils eine stoffschlüssige Verbindung zwischen Schweißmuffe 12 und erstem Kunststoffrohr 10 einerseits bzw. Schweißmuffe 12 und zweitem Kunststoffrohr 11 andererseits ergibt. Der verschweißte Bereich ist in Figur 2 mit 21 bezeichnet.

Die Verstärkungsschicht 14, die sich radial nach außen hin an die innere Schicht 13 anschließt, entsteht dadurch, dass in Längsrichtung orientierte Bänder 22, 23 auf den aus der inneren Schicht bestehenden Rohrkörper spiralförmig aufgewickelt werden. Dabei besteht die Verstärkungsschicht 14 selbst aus zwei oder auch mehreren Teilschichten, die mit 14 a und 14 b bezeichnet sind. Zunächst wird auf den rohrförmigen Körper der inneren Schicht 13 eine erste Lage orientierter Bänder 22 aufgewickelt und zwar vorzugsweise in einer spiralförmigen Wicklung um die Rohrachse herum, so dass die Bänder 22 auf Stoß aneinander liegen und eine geschlossene Lage auf der inneren Schicht bilden. Auf die die erste Teilschicht 14 a bildende erste Lage an Bändern 22 wird dann eine zweite Lage Verstärkungsbänder 23 aufgewickelt, ebenfalls wiederum spiralförmig um die Rohrachse herum und in einem bestimmten empirisch als optimal ermittelten Winkel zur Rohrachse. Diese zweite Lage Bänder 23 überdeckt die erste Lage Bänder 22 im Idealfall vollständig, wobei diese zweite Lage Verstärkungsbänder 23 dann die zweite Teilschicht 14 b der Verstärkungsschicht 14 bildet. Die Bänder 23 der zweiten Lage werden dabei bevorzugt so über diejenigen Bänder 22 der ersten Lage gewickelt, dass die Wicklung jeweils etwa den gleichen Winkel der Neigung zur Rohrachse haben, jedoch im jeweils umgekehrten Drehsinn. Es können auch mehr als zwei Lagen dieser Bänder 22, 23 aufgewickelt werden, zum Beispiel vier oder sechs Lagen. Über die oberste Teilschicht 14 b der Verstärkungsschicht 14 wird dann die obere abschließende Deckschicht 15 aufgebracht, beispielsweise aufextrudiert.

Die für die Verstärkungsschicht 14 verwendeten Bänder 22, 23 bestehen aus einem Kunststoff, dessen Gefüge eine Orientierung in Längsrichtung aufweist, was man dadurch erreichen kann, dass man zuvor extrudierte Bänder in einer Anordnung von Walzen gegebenenfalls unter Erwärmung, jedoch unterhalb der Schmelztemperatur des Kunststoffs verstreckt (dehnt). Diese Kaltverstreckung führt zu einer erheblichen Verfestigung des Materials in der Längsrichtung. Da die verstreckten Bänder 22, 23 auf den rohrförmigen Grundköper der innen liegenden Schicht 13 spiralförmig aufgewickelt werden, ergibt sich eine Verfestigung des rohrförmigen Muffenkörpers in Umfangsrichtung und folglich eine Erhöhung der so gefertigten Schweißmuffe gegen von radial innen einwirkende Druckkräfte. Dabei benötigt man zur Erzielung einer gewissen Erhöhung der radialen Druckfestigkeit erheblich weniger Kunststoffmaterial als bei Verwendung herkömmlicher Kunststoffe.

### Bezugszeichenliste

- 10: Rohr
- 11: Rohr
- 12: Muffenkörper
- 13: innen liegende Schicht
- 14: Verstärkungsschicht
- 14 a: erste Lage der Verstärkungsschicht
- 14 b: zweite Lage der Verstärkungsschicht
- 15: äußere Deckschicht
- 16: Heizwendel
- 17: äußere Schicht
- 18: innere Schicht
- 19: äußere Schicht
- 20: innere Schicht
- 21: verschweißter Bereich
- 22: erste Lage Bänder zur Verstärkung
- 23: zweite Lage Bänder zur Verstärkung

## Patentansprüche

1. Verfahren zur Herstellung einer Schweißmuffe zur Verbindung mindestens zweier Kunststoffrohre oder Verbundrohre, bei dem man in einem ersten Schritt einen zylindrischen Träger aus Kunststoff durch Extrusion herstellt, auf diesen zylindrischen Träger wenigstens eine Verstärkungsschicht aufbringt, indem man wenigstens eine Lage aus einem Verstärkungsband aus einem in wenigstens einer Richtung orientierten Kunststoff auf den zylindrischen Träger aufwickelt, man das Verstärkungsband mit dem zylindrischen Träger durch Verschweißen stoffschlüssig verbindet, wobei der Kunststoff des Verstärkungsbandes überwiegend seine Orientierung behält, man danach den verstärkten zylindrischen Träger auf eine gewünschte Länge ablängt und in den erhaltenen Rohling des Muffenkörpers ein Heizelement einbringt, wobei man schließlich den Muffenkörper mit einer äußeren Deckschicht aus Kunststoff überzieht, wobei dieser Schritt vor oder nach dem Einbringen des Heizelements in den Rohling des Muffenkörpers durchgeführt werden kann.

2. Verfahren zur Herstellung einer Schweißmuffe nach Anspruch 1, welche geeignet Ist für das Verschweißen mindestens zweier Kunststoffrohre oder Verbundrohre unter Verwendung eines rohrförmigen Muffenkörpers, der die zu verbindenden Kunststoffrohre übergreift, sowie einer Heizvorrichtung zur mindestens bereichsweisen Erwärmung von Kontaktflächen am inneren Umfang des Muffenkörpers und/oder am äußeren Umfang der Kunststoffrohre, um eine Verschweißung im Bereich dieser Kontaktflächen herzustellen, wobei die Schweißmuffe eine Heizwendelmuffe Ist und wenigstens ein ringförmiges Verstärkungselement aufweist und der Muffenkörper (12) einen Verbund mit mindestens zwei Schichten (13, 14, 15) aus Kunststoff umfasst, von denen mindestens eine Schicht (14) eine Verstärkungsschicht Ist,
**dadurch gekennzeichnet, dass** wenigstens eine Verstärkungsschicht wenigstens ein in mindestens einer Raumrichtung orientiertes Verstärkungsband (22, 23) aus einem thermoplastischen Kunststoff umfasst, welches auf einen zylindrischen Träger (13) aus Kunststoff der Heizwendelmuffe aufgewickelt ist, wobei mindestens ein Verstärkungsband (22, 23) zur Herstellung mindestens einer Verstärkungsschicht (14a, b) der Schweißmuffe (12) mindestens eine Schicht umfasst, die eine Orientierung In Längsrichtung des Bandes aufweist.

3. Verfahren zur Herstellung einer Schweißmuffe nach Anspruch 2, **dadurch gekennzeichnet, dass** die Orientierung des Bandes (22, 23) erhalten wurde durch Verstrecken des Bandes, vorzugsweise durch Kaltverstrecken unterhalb der Schmelztemperatur des Kunststoffs.

4. Verfahren zur Herstellung einer Schweißmuffe nach einem der Ansprüche 2 oder 3, **dadurch gekennzeichnet, dass** die Verstärkungsschicht hergestellt ist durch aufeinander folgendes Aufwickeln mindestens zweier Lagen orientierter Verstärkungsbänder (22, 23) übereinander, vorzugsweise im entgegen gesetzten Drehsinn bezogen auf die Achse des Trägers (des Muffenkörpers).

5. Verfahren zur Herstellung einer Schweißmuffe nach einem der Ansprüche 2 bis 4, **dadurch gekennzeichnet, dass** diese aus miteinander verschweißten Schichten (13, 14, 15) von werkstoffhomogenen oder weitgehend werkstoffhomogenen Kunststoffen hergestellt wird, die aus chemisch identischen oder chemisch verwandten Kunststoffen bestehen, die gegebenenfalls unterschiedliche physikalische Eigenschaften, insbesondere unterschiedliche Festigkeiten aufweisen.

6. Verfahren zur Herstellung einer Schweißmuffe nach einem der Ansprüche 2 bis 5, **dadurch gekennzeichnet, dass** mindestens eine Verstärkungsschicht (14) eine innen liegende Schicht des Muffenkörpers ist.

7. Verfahren zur Herstellung einer Schweißmuffe nach einem der Ansprüche 2 bis 6, **dadurch gekennzeichnet, dass** mindestens eine durch Verstrecken erhaltene Verstärkungsschicht (14) latente eingefrorene Spannungen In Umfangsrichtung aufweist.

8. Verfahren zur Herstellung einer Schweißmuffe nach einem der Ansprüche 2 bis 7, **dadurch gekennzeichnet, dass** diese in den Muffenkörper (12) eingebettete Heizwendel (16) zur Erwärmung mindestens der inneren Umfangsfläche der Schweißmuffe umfasst, wobei die Heizwendel in eine thermoplastische Kunststoffschicht (13) eingebettet sind, die nicht die Verstärkungsschicht ist.

## Claims

1. A method for producing a welding sleeve for connecting at least two plastic pipes or composite pipes, in which in a first step, one produces a cylindrical support made from plastic by extrusion, applies at least one reinforcing layer to this cylindrical support, in that one coils up at least one layer made from a reinforcing strip made of a plastic orientated in at least one direction onto the cylindrical support, one connects the reinforcing strip to the cylindrical support in a materially-bonded manner by welding, wherein the plastic of the reinforcing strip predominantly retains the orientation thereof, one subsequently cuts the reinforced cylindrical support to a desired length and introduces a heating element into the obtained blank of the sleeve body, wherein one finally covers the sleeve body with an outer cover layer made from plastic, wherein this step can be carried out before or after the introduction of the heating element into the blank of the sleeve body.

2. The method for producing a welding sleeve according to Claim 1, which is suitable for the welding of at least two plastic pipes or composite pipes using a tubular sleeve body, which laps the plastic pipes to be connected, and also a heating device for heating at least in certain areas of contact surfaces on the inner circumference of the sleeve body and/or on the outer circumference of the plastic pipes, in order to produce a weld in the region of these contact surfaces, wherein the welding sleeve is a heating coil sleeve and has at least one annular reinforcing element and the sleeve body (12) comprises a composite with at least two layers (13, 14, 15) made from plastic, of which at least one layer (14) is a reinforcing layer,
**characterised in that** at least one reinforcing layer comprises at least one reinforcing strip (22, 23) orientated in at least one spatial direction and made from a thermoplastic, which is wound onto a cylindrical support (13) made from plastic of the heating coil sleeve, wherein at least one reinforcing strip (22, 23) for producing at least one reinforcing layer (14a, b) of the welding sleeve (12) comprises at least one layer which has an orientation in the longitudinal direction of the strip.

3. The method for producing a welding sleeve according to Claim 2, **characterised in that** the orientation of the strip (22, 23) was obtained by drawing the strip, preferably by cold drawing below the melting temperature of the plastic.

4. The method for producing a welding sleeve according to one of Claims 2 or 3, **characterised in that** the reinforcing layer is produced by successive coiling up of at least two layers of orientated reinforcing strips (22, 23) one above the other, preferably in opposing directions of rotation with respect to the axis of the support (the sleeve body).

5. The method for producing a welding sleeve according to one of Claims 2 to 4, **characterised in that** the same is produced from mutually welded layers (13, 14, 15) of materially homogeneous or substantially materially homogeneous plastics which consist of chemically identical or chemically related plastics, which if appropriate have different physical properties, particularly different strengths.

6. The method for producing a welding sleeve according to one of Claims 2 to 5, **characterised in that** at least one reinforcing layer (14) is an internal layer of the sleeve body.

7. The method for producing a welding sleeve according to one of Claims 2 to 6, **characterised in that** at least one reinforcing layer (14) obtained by drawing has latent frozen stresses in the circumferential direction.

8. The method for producing a welding sleeve according to one of Claims 2 to 7, **characterised in that** the same comprises heating coils (16) embedded in the sleeve body (12) for heating at least the internal circumferential surface of the welding sleeve, wherein the heating coils are embedded in a thermoplastic layer (13) which is not the reinforcing layer.

## Revendications

1. Procédé de fabrication d'un manchon à souder pour relier au moins deux tuyaux en plastique ou tuyaux de liaison, dans lequel on fabrique dans une première étape un support cylindrique en plastique par extrusion, on applique sur ce support cylindrique au moins une couche de renforcement, en enroulant au moins une couche constituée d'une bande de renforcement en plastique orienté dans au moins une direction sur le support cylindrique, on relie par conjonction de matière la bande de renforcement avec le support cylindrique par soudure, dans lequel le plastique de la bande de renforcement conserve essentiellement son orientation, on coupe ensuite à longueur le support cylindrique renforcé à une longueur souhaitée et on insère un élément chauffant dans l'ébauche obtenue du corps de manchon, dans lequel on enrobe finalement le corps de manchon avec une couche de couverture extérieure en plastique, dans lequel cette étape peut être effectuée avant ou après l'insertion de l'élément chauffant dans l'ébauche du corps de manchon.

2. Procédé de fabrication d'un manchon à souder selon la revendication 1, qui est approprié à la soudure d'au moins deux tuyaux en plastique ou tuyaux de liaison en utilisant un corps de manchon tubulaire, qui s'engage sur les tuyaux en plastique à relier, ainsi qu'un dispositif de chauffage pour réchauffer au moins sur des portions les surfaces de contact sur la circonférence intérieure du corps de manchon et/ou sur la circonférence extérieure des tuyaux en plastique, afin de produire une soudure au niveau de ces surfaces de contact, dans lequel le manchon à souder est un manchon d'électrofusion et présente au moins un élément de renforcement annulaire et le corps de manchon (12) comprend une liaison composite avec au moins deux couches (13, 14, 15) en plastique, desquelles au moins une couche (14) es une couche de renforcement,
**caractérisé en ce que** au moins une couche de renforcement comprend au moins une bande de renforcement (22, 23) en un plastique thermoplastique orientée dans au moins une direction spatiale, qui est enroulée sur un support cylindrique (13) en plastique du manchon d'électrofusion, dans lequel au moins une bande de renforcement (22, 23) pour produire au moins une couche de renforcement (14a, b) du manchon à souder (12) comprend au moins une couche, qui présente une orientation dans la direction longitudinale de la bande.

3. Procédé de fabrication d'un manchon à souder selon la revendication 2, **caractérisé en ce que** l'orientation de la bande (22, 23) a été obtenue en étirant la bande, de préférence par étirage à froid, au-dessus de la température de fusion du plastique.

4. Procédé de fabrication d'un manchon à souder selon une des revendications 2 u 3, **caractérisé en ce que** la couche de renforcement est fabriquée par enroulement successif l'un sur l'autre d'au moins deux couches de bandes de renforcement (22, 23) orientées l'une sur l'autre, de préférence en sens antihoraire par rapport à l'axe du support (du corps de manchon).

5. Procédé de fabrication d'un manchon à souder selon une des revendications 2 à 4, **caractérisé en ce que** celui-ci est fabriqué à partir de couches (13, 14, 15) soudées l'une à l'autre de plastiques homogènes en matière ou essentiellement homogènes en matière, qui sont constitués de plastiques chimiquement identiques ou chimiquement apparentés, qui le cas échéant présentent des propriétés physiques différentes, notamment des rigidités différentes.

6. Procédé de fabrication d'un manchon à souder selon une des revendications 2 à 5, **caractérisé en ce que** au moins une couche de renforcement (14) est une couche située à l'intérieur du corps de manchon.

7. Procédé de fabrication d'un manchon à souder selon une des revendications 2 à 6, **caractérisé en ce que** au moins une couche de renforcement (14) obtenue par étirage présente des tensions gelées latentes dans la direction circonférentielle.

8. Procédé de fabrication d'un manchon à souder selon une des revendications 2 à 7, **caractérisé en ce que** celui-ci comprend des filaments chauffants (16) incorporés dans le corps de manchon (12) pour réchauffer au moins la surface circonférentielle intérieure du manchon à souder, dans lequel les filaments chauffants sont incorporés dans une couche de plastique thermoplastique (13), qui n'est pas la couche de renforcement.
